Europäisches Patentamt

European Patent Office

Office européen des brevets

(11) Publication number : **0 474 405 A1**

## (12) EUROPEAN PATENT APPLICATION

(21) Application number : **91307726.9**

(51) Int. Cl.⁵ : **B62D 55/253**

(22) Date of filing : **22.08.91**

(30) Priority : **22.08.90 ZA 906677**

(43) Date of publication of application :
**11.03.92 Bulletin 92/11**

(84) Designated Contracting States :
**CH DE ES FR GB IT LI**

(71) Applicant : **Barnard, Jan Hendrik**
**Section 90 of Section 77**
**Wildebeesthoek 310 JR District Pretoria**
**Transvaal Province (ZA)**

(72) Inventor : **Barnard, Jan Hendrik**
**Section 90 of Section 77**
**Wildebeesthoek 310 JR District Pretoria**
**Transvaal Province (ZA)**

(74) Representative : **Spall, Christopher John et al**
**BARKER, BRETTELL & DUNCAN 138 Hagley**
**Road**
**Edgbaston Birmingham B16 9PW (GB)**

(54) **Vehicle traction.**

(57) An endless track member (12) for a track laying vehicle has separate, transversely orientated, track elements (32, 232) and at least one elongate core element (100), 300) holding the track elements abuttingly together, bead fashion. Each track element has, at opposed sides, abutting formations (78) abutting corresponding formations (78) of adjacent track elements (32, 232) such as to allow relative pivoting of adjacent rack elements about lateral pivot axes, outer checking formations (106) to abut corresponding formations of adjacent track elements to limit the radius of curvature a portion of the track member can assume without deformation to a predetermined maximum value, and inner checking formations (102) to abut corresponding formations of adjacent track elements to limit the radius of curvature a portion of the track member can assume without deformation to a predetermined minimum value commensurate with the diameter of wheels (18, 20) over which the track member runs. Each track element includes a seat (40, 240) for each core element at a level corresponding to the level of said lateral pivot axes.

EP 0 474 405 A1

Jouve, 18, rue Saint-Denis, 75001 PARIS

FIG 3

THIS INVENTION relates to an endless track member including a plurality of transversely orientated track elements held together bead fashion by one or more elongate core elements. It relates also to such a track element.

In accordance with the invention, there is provided an endless track member for a track laying vehicle, which has, for each track member, longitudinally spaced laterally aligned fore and aft wheels about which wheels the respective track members are supported in use, the endless track member comprising a plurality of separate, transversely orientated, track elements each having a tread and at least one elongate core element holding the track elements abuttingly together, bead fashion,
each track element comprising, at opposed sides which will be transversely orientated sides in use,

abutting formations operatively abutting corresponding abutting formations of adjacent track elements, the abutting formations being arranged to allow relative pivoting of adjacent track elements in use about lateral pivot axes at predetermined positions,

outer checking formations arranged to abut corresponding outer checking formations of adjacent track elements to limit the radius of curvature a portion of the track member can assume without deformation to a predetermined maximum value which maximum value is at least larger than the radius of curvature of a hypothetical circular track member around the fore and aft wheels, and

inner checking formations arranged to abut corresponding inner checking formations of adjacent track elements to limit the radius of curvature a portion of the track member can assume without deformation to a predetermined minimum value corresponding to the radius of curvature of a portion of the track member when supported on one of said wheels;
each track element comprising a seat for the or each core element at a predermined position at a level corresponding substantially to the said predetermined positions of the lateral pivot axes.

The or all core elements may have a predetermined (combined) resilience and the or all core elements may be supported on said seats such as to allow relative sliding of the or all core elements over the respective seats such that, in use under the weight of the track laying vehicle, the or all core elements can be stretched to allow the track member to flatten along a portion of its length, which portion is at least shorter than the longitudinal spacing of the wheel axes.

The Inventor has found that such flattening of the track member takes place progressively over time in a stationary vehicle. However, it takes places to a limited degree only in a moving vehicle. On the assumption that such flattening translates into energy loss, it is important that flattening is limited in a moving vehicle.

Such flattening is also proportional to the traction. Traction necessarily causes elongate of the core(s), which elongation causes or intensifies the degree of flattening. Such flattening or intensified flattening has beneficial side effects, namely to enlarge the footprints and, because of the enlarged footprints, to enhance the stability of the tracks and thus of the vehicle.

It must be appreciated that such flattening takes place in a pratical embodiment over a longitudinal dimension of the oder of 1 m to 2 m, whereas the unstressed radius of curvature is that of a circle of a diameter of typically about 10 m to about 15m. Thus, such flattening is actually slight.

Said maximum radius of curvature may be between three and four times the radius of curvature of said hypothetical circular track member extending around the fore and aft wheels. Thus, for a longitudinal spacing between axes of the wheels of about 2 m, the hypothetical circular track member may have a diameter of between about 10 m and about 15 m (bearing in mind the finite diameter of the wheels and the finite radial depth of the track member.

Each of a major portion of the track element may comprise at least one abutting member,
which is located on the track element with at least slight freedom of motion in pivoting about an axis at right angles to an operative surface of the tread of the track element,
which has a dimension in the longitudinal direction of the track member corresponding to the dimension of the track element in said direction, and
which has opposed sides providing the abutting formations.

The or each abutting member of at least one track element may irrotationally be located on said track element in a predetermined orientation relative to an axis at right angles to an operative surface of the tread of said track element, such as to cause those abutting members of the other track elements, located with said at least slight freedom of motion in pivoting, to align themselves generally in accordance with said predetermined orientation. The predetermined orientation is preferably such that abutting formations of the abutting member are at right angles to the longitudinal direction of the track member. This measure ensures in use that the abutting members, in conjunction, do not misalign themselves.

The abutting members may be of steel and may be fine blanked in respect of their opposed sides. If desired, the abutting members may be of a hardenable material, such as a material which allows nitriding, to enhance the hardness after fine blanking, without, however, substantially altering the dimensions. The Inventor is of opinion that it will not be required to harden the abutting members for normal applications. Advantageously, the fine blanked abutting members provide an exact summation of total tangential lenght of the track member. This allows the core element to be designed and spliced into a grommet of specific, predetermined, length.

Each track element may have a tread support plate supporting the tread of the track element, the tread support plates being of steel and having opposed sides which are laterally orientated and which provide said outer checking formations. Each track element may be of open construction having a base, the tread support plate being spatially mounted on the base via spacers. It is an advantage of such open construction that matter which has ingressed in between track elements, can easily move out of the rack elements, thus preventing a build up of foreign material within track elements or between track elements.

Said fore and aft wheels may each be in the form of a composite or double wheel having a circumferential groove, and each of at least some of the track elements may have, fast therewith, intermediate lateral extremities thereof, a locating member arranged to extend in a direction generally oppositely to and at right angles to an operative surface of the tread of the track element, each locating member having laterally outwardly facing sides of size and shape predetermined to be complemental to the grooves of the wheels, each locating member having longitudinally outwardly facing surfaces of complemental size and shape to provide the inner checking formations. Each locating member, when viewed laterally in profile, may taper to a minimum dimension at a free end thereof to provide complementally taper surfaces of the inner checking formations, which taper surfaces, in use while being supported on a wheel, will extend radially.

Each track element may include at a first side, a protrusion and, at a second side, a complemental socket aligned with the protrusion of an adjacent track element, the protrusions and sockets being arranged and being of appropriate shape to allow partial penetration and withdrawal through small distances of the protrusions into and from their respective sockets in the form of pivotal rolling in use substantially without rubbing as pivoting takes place during bending and unbending of the track member as it runs in use over the fore and aft wheels, the protrusions and sockets being adapted to align the track elements with one another.

The invention is now described by way of examples with reference to the accompanying diagrammatic drawings. In the drawings

Figure 1 shows, in side view, a track assembly including a first embodiment of a track member in accordance with the invention;

Figure 2 shows, in side view, to an enlarged scale, the track element of Figure 1;

Figure 3 corresponds to Figure 2 but shows an end view; and

Figure 4 corresponds to Figure 2, but shows, fragmentarily, an improved embodiment.

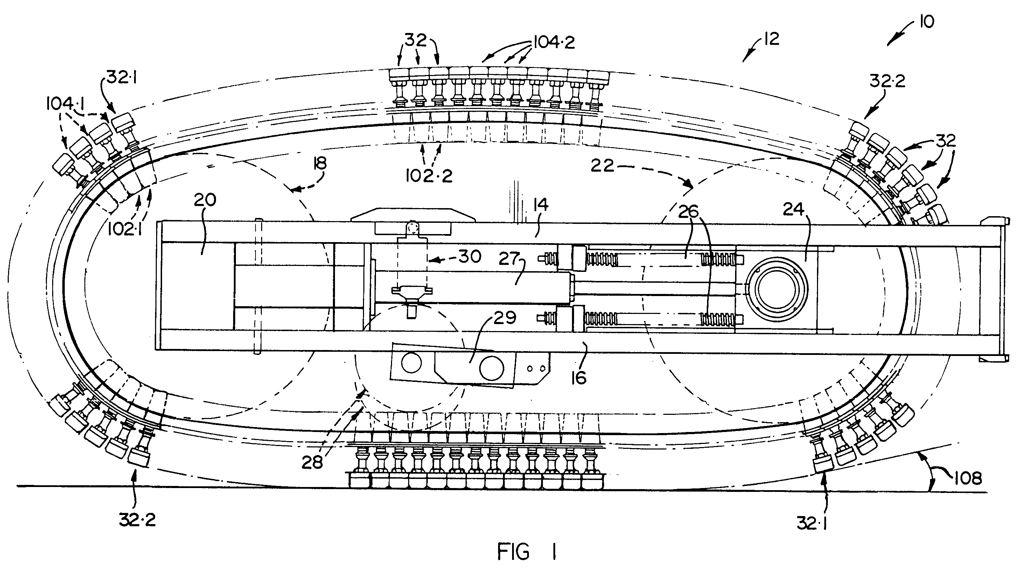

With reference to Figure 1 of the drawings, a track assembly for a track laying vehicle is generally indicated by reference numeral 10. The track assembly 10 comprises a track member 12 in accordance with the invention. The track member 12 is operatively supported for rotation on a support frame described herebelow.

The support frame comprises, broadly, upper and lower longitudinal beams 14, 16. A drive wheel generally indicated by reference numeral 18 is mounted for rotation on a fixed mounting block 20 fixed to rear ends of the upper and lower longitudinal beams 14, 16. Toward fore ends of the beams 14, 16, there is provided a slidable mounting block 24 on which is mounted for rotation a free running fore wheel 22. Adjustment screws 26 co-operate with a ram 27 to bias the slidable block 24 away from the fixed block 20 longitudinally to space the free running wheel 22 from the drive wheel 18 and thus also to place the track member 12 under tension as will become apparent hereinafter.

The track member 12 comprises a plurality of transversely orientated track elements 32 and a plurality of endless elongate core elements in the form of steel wire ropes holding the track elements 32 abuttingly together, bead fashion. The track member 12 runs over the wheels 18, 22 as will become apparent hereinafter.

An auxiliary wheel 28 is mounted on the lower longitudinal beam 16 via a swing arm assembly 29. Hydraulic bias means 30, anchored on the upper longitudinal beam 14 is arranged to bias the auxiliary wheel 28 downwardly to various positions, as shown in Figure 1. When the track laying vehicle is to turn sharply, the auxiliary wheel 28 is biassed downwardly to reduce the footprint, i.e. to reduce the contact area between the track member 12 and a support surface, to facilitate turning and to reduce track wear during turning.

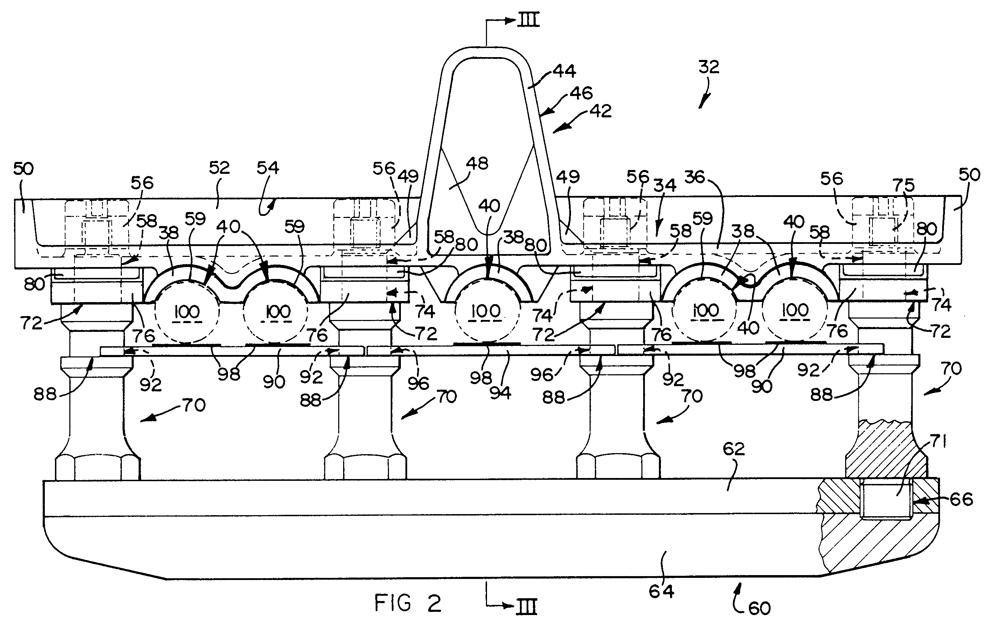

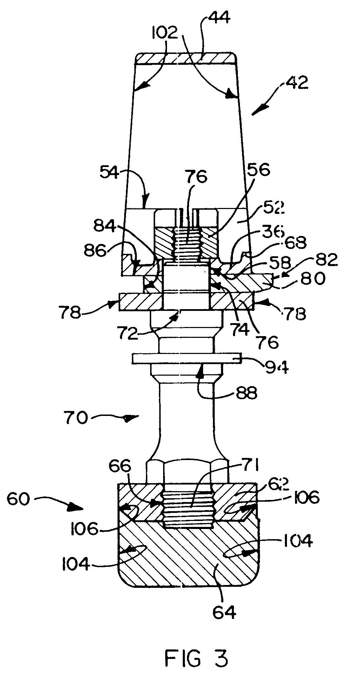

A track element 32 is now described in more detail with reference to Figures 2 and 3. It is to be appreciated that the track elements 32 are orientated transversely with respect to the track member 12. Thus, for example, ends of the track elements 32 correspond with sides of the track member 12, and the like.

The track element 32 is in the form of an assembly comprising a base 34, which, in this embodiment, is in the form of a metal casting. The base 34 comprises an elongate bed plate 36 extending along the length of the track element 32. Also its width corresponds generally to the width of the track element, although sides thereof are not intended to abut corresponding sides of adjacent track element bed plates, as will become apparent hereinafter.

On one face of the bed plate 36, which will be an outer face in use, there is provided a plurality, in this embodiment five, arcuate seat formations 38, each defining a part circular seat 40 for the core elements. Each seat 40 is covered by a thin layer of a cushion material, in this embodiment a layer 59 of polyurethane bonded to the metal seat 40.

One the other face of the bed plate 36, which will be an inner face in use, there is provided an integral locating formation 42 having a periphery or border 44 of inverted U or V shape. The periphery or border 44 is symmetrical and has laterally facing sides 46 of predetermined size and shape. The locating formation 42 is strengthened by means of an internal gusset 48. It also has external gussets 49.

Each wheel 18, 22 illustrated schematically in Figure 1 is a composite wheel comprising a pair of pneumatic tyres arranged side by side and forming a peripheral groove intermediate their crowns. The size and shape of the laterally facing sides 46 of the locating formation 42 are complemental to the size and shape of the grooves to enable the locating formations 42 to be received in the grooves and thus to locate the track member 12 laterally on the wheels 18, 22.

With reference to Figure 3, the locating formation 42 also has ends 102 which will be longitudinally facing relative to the track member 12. The ends 102 are tapered as can be seen in Figure 3. The taper angle is predetermined as a function of the circumferential spacing of the track elements and the diameter of the wheels 18, 22, the significance of which will become apparent hereinafter.

With reference again to Figure 1, for each wheel 18, 22, there is defined a position for a track element, conveniently indicated at 32.1 representing the point on the respective wheel at which the track member 12 starts being tangential to the wheel and starts following the periphery of the wheel. Similarly, for each wheel, a position for a track element indicated at 32.2 represents the position where the track member starts leaving the wheel i.e. the last position at which track elements are still tangential to the wheel. From the above it follows that, for each wheel, the track element at positions 32.1 and 32.2 and the track elements intermediate those positions are concentric to the wheel. The ends 102, and more specifically their taper angle, is predetermined to allow abutting of ends 102 of adjacent track elements thus to orientate each track element 32 to be radial with respect to its wheel. In Figure 1 reference 102.1 indicates the ends 102 interabutting. It is to be appreciated that the exact positions 32.1 on wheel 22 and 32.2 on wheel 18 change depending on the condition of the track member, between these positions, i.e. its degree of flattening as will be described below. The positions 32.1 for wheel 18 and 32.2 for wheel 22 remain the same.

Intermediate the wheels, the track elements are not concentric to the wheels and have a far larger radius of curvature. Thus, in those areas, as shown by reference numeral 102.2, the ends 102 are spaced and are thus not abutting. More specifically, the portion of the track member intermediate the position 32.1 on wheel 18 and position 32.2 on wheel 22 has a specific, predetermined radius of curvature. In that portion, the core elements are not stressed or additionally stressed due to engine torque or due to vehicle mass. Thus, the radius of curvature of that portion is governed by the difference in angular orientation of adjacent track elements in relation to their longitudinal spacing. The difference in angular orientation again is imposed on the track elements by the difference in width between sole assemblies 60 and abutting blocks 76 in relation to their radial or depth spacing as will be described hereinafter. That radius of curvature is of the order of about three to four times that of a hypothetical circular track member around the wheels 18, 22. The track member portion resting on the support surfaces is flattened to a degree depending on the condition of the track member, e.g. the degree to which the core elements are stressed on account of engine torque, the mass of the vehicle, the pressure of the wheel 28, and the like.

With reference again to Figures 2 and 3, the bed plate 36 has flanges 50 at ends thereof. A rubber moulding 52 is ultimately bonded after assembly to the inner face of the bed plate 36 intermediate the respective flanges 50 and a corresponding side 46 of the locating formation 42. The rubber mouldings 52 have inner surfaces 54 which are parallel to the bed plate 36. In use, the treads of the pneumatic tyres of the wheels 18, 22 abut the surfaces 54.

At predetermined positions spaced along the length of the bed plate 36, apertures 58 are provided through the bed plate and screw threaded nuts 56 are ultimately, after assembly, embedded in the rubber moulding 52 in association with the apertures 58.

At an outer extremity of the track element 32, it has a sole assembly 60 comprising a support plate 62 of hardened steel and which is generally parallel to the bed plate 36. It further comprises a reinforced rubber tread 64 bonded to an outer face of the support plate 62.

At positions aligned with the apertures 58, the support plate 62 has screw threaded apertures 66.

The sole assembly 60 is mounted on the bed plate 36 in spaced configuration by means of spacers in the form of four pedestals 70. The pedestals 70 also mount other components which will be described hereinafter and which are assembled on the pedestals 70 prior to fixing of the sole assembly 60 on the bed plate 36.

Each pedestal 70 has, at one end thereof, a screw threaded nipple 71 which is securely screwed into one of the screw threads 66 of the support plate 62.

Toward an opposed end of each pedestal 70, it has a shoulder 72 facing away from the end anchored in the support plate 62. From the shoulder 72, it has a concentric shank 74 having, at a free end thereof, a screw threaded nipple 75. The sole assembly 60 with the four pedestals 70 are arranged such that the shanks 74 extend through the apertures 58 in the bed plate 36 and to allow the nuts 56 to be securely screwed onto the screw threads 75. When thus securely assembled, the rubber moulding 52, which is steel wire reinforced, is compression moulded onto the bed plate 36. As can best be seen from Figure 3, the bed plate 36 has side flanges 68 forming a cavity for the rubber moulding 52 to enhance bonding.

In respect of all but one of the track elements 32, each shoulder 72 there is supported an abutment block 76 having a central aperture through which the shank 74 is received with clearance. Each abutment block 76 is produced by fine blanking from a hardenable material to ensure that each block 76 has opposed sides 78 which are accurately spaced. In respect of the track element excepted, the abutment blocks 76 are irrotationally located, e.g. by means of welding but preferably via square shanks, in a predetermined orientation in which abutment surfaces 78 thereof will be at right angles to the longitudinal direction in which the track member extends when assembled.

Intermediate the respective abutment blocks 76 and the bed plate 36, there are provided guide plates 80. Each guide plate 80 has an offset aperture to receive the shank 74. The aperture is specifically offset to allow one side, in the form of a nose and indicated by reference numeral 82, to stand proud of the corresponding side 78 of the abutment block 76 and the other side 84 to be inset intermediate the abutment block 76 and the bed plate 36 to form a socket 86 for the nose 82 of the guide block 80 of an adjacent track element. The nose 82, at its outer face, is tapered and is rounded to allow insertion into and withdrawal from the socket 86 without rubbing. If desired, the guide blocks 80 may be of an abrasion resistant, slightly pliable material such as polyurethane. The guide plates 80 are located such that they can align pivotally to ensure equalized lateral pressure distribution amongst the abutment surfaces 78.

Each pedestal 70 has an intermediate shoulder 88 also facing away from the sole assembly 60. Between each pedestal 70 toward ends of the track element and an adjacent pedestal 70 toward the centre of the track element, there is provided a closing plate 90 having, at ends thereof, semi-circular recesses 92 to allow them to be assembled in between pedestals 70. Similarly, in between the intermediate pedestal 70, there is provided a closing plate 94 having semi-circular recesses 96.

On the inner faces of the closing plates 90, 94, there are provided layers 98 of polyurethane in register with the seats 40.

The core elements holding the track elements 32 abuttingly together, in this embodiment, are in the form of steel wire ropes 100 which are held captive on the seats 40 by means of the closing plates 90, 94. It is to be appreciated that contact with each rope is via the polyurethane layers 59, 98 to prevent wear. Each rope 100 is held captive but such as to allow bending and straightening as any position on the rope follows the periphery of a wheel and then straightens between wheels. Contact of the rope with each track element is mainly via the seats 40. It is to be appreciated that substantially no nett sliding displacement takes place between each rope and the respective seats. This is ensured by the radial position of the seats, which is at substantially the same radial level as the abutting blocks 76. This aspect is further amplified with reference to a further embodiment described below.

With reference to Figure 3, it is shown that the tread 64 has sides 104 and, radially inward of each side 104, a slightly rebated portion 106 flush with sides of the support plate 62. Thus, with reference to Figure 1, at positions intermediate the points 32.1 and 32.2 on different wheels 18, 22, the track elements interabut via the sides 104 of adjacent track elements as indicated by reference numeral 104.2. Intermediate the positions 32.1 and 32.2 on each of the wheels, the sides 104 are slightly spaced as indicated by reference numeral 104.1.

The abutment blocks 76 ensure positive spacing of the track elements 32 via their interabutting abutment faces 78. Along the radially inner edges of each abutment face 78, a pivot axis is defined along which pivoting of the track elements relative to one another takes place. It is to be noted that the level of the seats 40, corresponds substantially to the level of the pivot axes.

It is to be appreciated that the abutment blocks 76 of all but one of the track elements 32 are received over the shanks 74 with pivotal and at least slight translational clearance to allow each abutment block 76 to align itself relative to its neighbours such that the abutment takes place along the full edges or faces 78 of all of the blocks 76 simultaneously. This is to ensure that the combined or cumulative length of the abutment blocks equals the cable grommet length at the inner circumference. The abutment blocks 76 which are irrotationally located on the single track element 32 ensure that all of the abutment blocks 76 are generally orthogonally orientated.

It is a first feature of the invention that, while the track elements are concentric to a wheel, they are orientated radially by means of the predetermined shape and size and specifically the taper of the ends 102 of the locating formations 42. This is believed to be important for the circumferential spacing of track elements in the track member whilst negotiating its return along the periphery of an end wheel.

It is a second feature of the invention that sides 104 of the tread 64 interabut at positions intermediate the wheels to ensure that the elements of the track member 12 do no abut noisily when leaving the end wheels 18, 22. Intermediate the wheels, the member 12 is curved and resists forces tending to straighten the track member along those portions because the support plates 62 are slightly wider between faces 106 than the blocks 76 between their faces 78. The Applicant believes that this taper (on the outer ring sector) is extremely important in that it allows a relatively flat angle of attack of the track member 12 relative to a support surface as can be seen in Figure 1 as shown at 108. This simulates a large diameter wheel which facilitates rolling over the soil and thus reduces rolling resistance. Should the bottom portion of the track member intermediate the wheels be merely flat, the angle of attack would be dictated by the diameter of the leading wheel 22. Especially in loose soil where depression is substantial, this would create a continuous "wall" against which the vehicle must push or over which it must climb thus causing a high rolling resistance. In accordance with this invention, such radius of curvature simulating that of a large wheel is predetermined, as explained above.

It is very important that the beam-like construction of the track member along its lower, ground engaging run between the wheels 18, 22 provides a rigidity which obviates the need for small support or road wheels. Such auxiliary wheels cause high pressure peaks in use which cause soil compaction pressures as is well known from analyses carried out by experts in that field. In a track member of the invention, generally uniform pressure is exerted by the track member along its track.

It is a further feature of the invention that the track elements are not clamped to the ropes 100 thus allowing the elements to articulate freely and with minimum internal stress similar to rope driven sheaves. This feature minimizes drive line losses.

It is yet a further feature of the invention that the construction of each track element, and more specifically mounting of the sole assembly 60 onto the base 34, is light yet rigid. In the embodiment illustrated, it is believed that the construction can accommodate a force of 80 000 lbs (about 360 kN) without substantial deflection.

It is yet a further feature of the invention that spacing of the track elements are provided by the abutment blocks 76 which are of a simple construction which allows manufacture by fine blanking. It is believed that it is an advantage that a simple, relatively inexpensive, component which can easily and accurately be manufactured is utilized to dictate spacing.

It is a further feature that adjacent track elements are aligned and constrained by means of the guide blocks 80. It is an advantage that a light mass, high modulus material such as steel is utilized for the guide blocks.

Lateral location of the track member onto the wheels by means of the locating formations received within the grooves between pneumatic tyres is advantageous in many respects. The fact that the tyres are pneumatic allows them to bulge, at the bottom due to the vehicle mass, and also along the semi-cicular portions along which the track member runs, due to the force on account of the tractive effort which the track members transmit to the tyres. Such bulging nips the locating formations 42 between the pneumatic tyres thus enhancing transmission of torque from the tyres to the track members while the track members are running over or are negotiating the wheels 18, 22. Yet, along the rest of each wheel, the locating formations are free thus allowing easy penetration into the groove and withdrawal from the groove which reduce losses. In this regard, it is important that the locating formations are of smooth, rigid material such as steel to reduce the co-efficient of friction between the steel and the rubber of the pneumatic wheels, thus promoting low penetration and withdrawal resistance during operation.

The design of the track element is conducive to light mass construction and also lends itself to having at least some of the components manufactured of light metal such as aluminium and light synthetic plastics material such as polyurethane. For example, especially for smaller applications, it is believed that the base 34 can be in the form of an aluminium or aluminium alloy casting. Instead, or in addition, it can be cast with apertures or cavities to reduce mass. It is also envisaged that the support plate 62, along its inner, exposed side can be scalloped intermediate the pedestals 70 to reduce mass. The pedestals 70 can be of a light mass construction, e.g. synthetic plastics material. If of synthetic plastics material, it is envisaged that the pedestals will not have screw threaded nipples, but will rather have screw threaded sockets to co-operate with metal studs.

The track element of Figures 2 and 3 may be used with heavier applications where high traction forces are required, for example with rail/road locomotives in which application track members in accordance with the invention will replace the dual wheel system currently in use in such vehicles.

It is yet a further advantage that, should any one or a few track elements become damaged, they can be replaced individually and rapidly. Thus, if localized mechanical damage occurs, it is not necessary to replace the track member, but merely the individual track elements. Furthermore, it is to be appreciated that the track elements can be replaced without dismantling the track member and without removing the track member from the supporting wheels. This advantage is regarded as important bearing in mind the terrain over which track laying vehicles are used and the likelihood of localized damage. Thus, the track member in accordance with the invention has a large advantage over integral track members known to the Applicant.

It is yet a further advantage that the spacing between the support plate 62 and the closing plates 90, 94 is substantial to allow for the purging of any mud or other unwanted material. It is also to be appreciated that the width of the closing plates 90, 94 are substantially less than the widths of the abutment blocks 76, thus further enhancing the open construction of the track element. In this regard, it is also an advantage that the spacing between the driving surface 54 on which the treads of the pneumatic wheels run and the operative surface of the tread 64 is substantial thus reducing the chances of mud build-up or the ingress of other unwanted material on the periphery of the pneumatic tyres. Furthermore, it is to be noted that interabutting of the proud standing faces 104 will form seals against ingress of mud.

It is an advantage that the curvature of the lower contact periphery of each track member increases or flattens as tractive effort increases. This improves tractive adhesion to the ground surface for higher tractive force at the draw bar.

When in use on high speed vehicles, centrifugal force strains the core elements elastically. This elongation promotes flattening of the track member along its lower periphery which increases the contact surface and enhances directional stability.

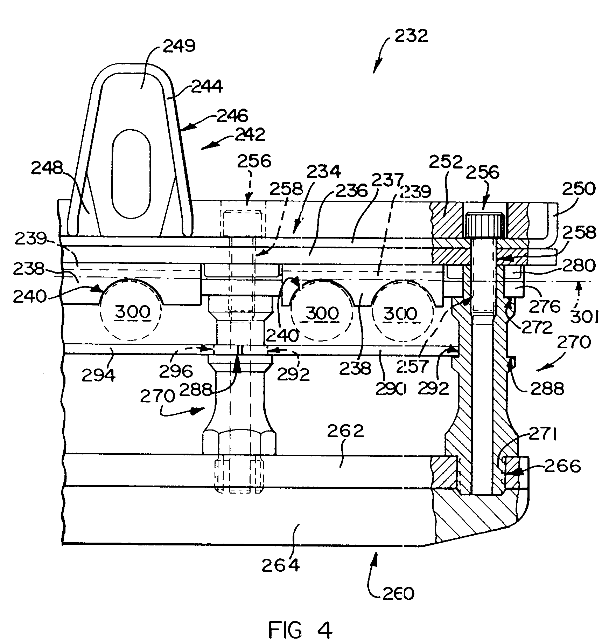

A developed embodiment, which has preferred features, especially for relatively light applications like in agricultural tractors, is now described with reference to Figure 4. The Figure 4 embodiment is in many respects similar to, even identical to, the embodiment of Figures 2 and 3, and it is thus not again described in detail. Like reference numerals refer to like components or features and important differences between the embodiments will merely be emphasized.

Instead of a cast base 34, the embodiment 232 has a composite base including a bed plate 236 of spring steel. The only working required on the bed plate 236 is the drilling of apertures 258. A mild steel cover plate 237 is adhesively bonded and simultaneously clamped to one side of the bed plate 236. The cover plate 237 has bent ends to provide the flanges 252. Furthermore, the locating formation 242 is welded to the cover plate 237.

The locating formation 242 is of lighter construction and has a strengthening web 249 internal of the periphery or border 244.

The pedestals 270 are advantageously of a lightweight material, even a synthetic material. The end of the pedestal 270 associated with the base 234 has an internally threaded bore 257 within which a cap screw 256 is threadingly received. The cap screw 256 is in each case passed snugly through the aperture 258 in the bed plate 236 and through a corresponding aperture in the cover plate 237.

The most important modification is in the provision of a separate seat member 238 which is bonded to the bed plate 236 at the side opposite to the cover plate 237. The seat member 238 advantageously includes a synthetic plastics material, preferably a suitable composite and thus provide seats 240 formed of such composite for the core elements 300.

It is important that to limit resilience of the seat member 238, it is in the form of a composite member having only a part thereof in a synthetic material, a fillet plate 238 of an incompressible material such as mild steel or bronze forming part thereof. The composite portion is bonded to the fillet plate 239, which in turn is bonded to the bed plate 236.

The inner level of the seats 240 is shown at 301. It is important that this level coincides closely with the level of the inner surfaces of the abutting blocks 276. The significance of this is that adjacent abutting blocks 276 abut each other along ends thereof. The adjacent blocks pivot in use about a line corresponding to the inner corners between those ends and the inner surfaces of the abutting blocks i.e. at the level 301.

The significance of this is that the Applicant has found that relative pivoting of the track elements relative to each other must take place along pivot axes at positions corresponding to tangents drawn to the core elements parallel to the axes about which pivoting takes place. This ensures that theoretically no nett creep and substantially no nett creep in practice takes place between the core elements and the respective seats.

The Applicant has realized that the track member has to have an inherent resilience provided by having the core elements of a predetermined cumulative resilience. The cumulative resilience is a compromise between a requirement on the one hand that the portions of the track element intermediate the wheels (in practice, the bottom portion between the wheels, as the top portion is not operative) must be curved, and on the other hand that limited flattening over a substantial portion of such length, or intensive flattening or even inflection over a small portion of such length, must be allowed to take place.

A finite curvature is required to ensure a relatively flat angle of attack shown by reference numeral 108 in Figure 1 and to obtain the advantages in that regard as explained above. Furthermore, by limiting the length of the footprint, manoeuvrability is enhanced without the necessity to utilize the auxiliary wheel 28. The most important advantage, however, is to ensure an effective footprint length which extends also in between the wheels 18, 22 without the necessity to utilize auxiliary wheels. This is effected in accordance with this invention by having the portion of the track element between the wheels 18 and 22 in the form of a semi-rigid beam. This can only be achieved by a curved track member portion. This enhances flotation and reduces the mean pressure and also the maximum pressure exerted on a support surface by the vehicle in use. This is in contrast to a situation where a track element with high compliance is used and pressure on the support surface is exerted only underneath the wheels 18, 22, or has to be exerted with the aid of intermediate auxiliary wheels. Such auxiliary wheels add to the mass, the complication, the cost and also the drive train losses of a track laying vehicle. They also cause pressure peaks responsible for unwanted soil compaction in agriculture and forestry.

On the other hand, the radius of curvature of the bottom portion cannot be too small lest support be concentrated too much in the centre between the wheels 18, 22. Thus, some degree of flattening is advantageous to enlarge the effective footprint. Such enlargement of the effective footprint can also add to the stability of the vehicle as was explained above.

A further problem which the provision of some cumulative resilience alleviates is when a track member is driven over a relatively small protrusion such as a rock in an agricultural land, a tree trunk in the veld, or the like. If some resilience is not built into the track member, negotiating such protruding objects can cause tremendously high point loads on the track member. In the instant embodiment, however, the cumulative resilience over the length of the track member or a relatively large portion thereof can be concentrated at one point to allow even inflection of the track element over a short length to facilitate negotiating such small, protruding objects. This feature is achieved by having the core elements merely abutting the seat 40, 240 and not being clamped to the respective track elements. It is emphasized that the relative sliding of the track elements over the seats under conditions as described above is firstly not excessive, and secondly takes place infrequently i.e. under conditions which would otherwise have caused excessive loading on a single or a few track elements. Furthermore, corrective reverse sliding is expected to take place immediately after such an arduous condition has taken place.

## Claims

1. An endless track member (12) for a track laying vehicle, which has, for each track member, longitudinally spaced laterally aligned fore and aft wheels (18, 22) about which wheels the respective track members are supported in use, the endless track member comprising a plurality of separate, transversely orientated, track elements (32, 232) each having a tread (64, 264) and at least one elongate core element (100, 300) holding the track elements abuttingly together, bead fashion,
   characterized in that
   each track element (32, 232) comprises, at opposed sides which will be transversely orientated sides in use,
   abutting formations (78) operatively abutting corresponding abutting formations (78) of adjacent track elements (32, 232), the abutting formations being arranged to allow relative pivoting of adjacent track elements in use about lateral pivot axes at predetermined positions,
   outer checking formations (106) arranged to abut corresponding outer checking formations (106) of adjacent track elements to limit the radius of curvature a portion of the track member can assume without deformation to a predetermined maximum value which maximum value is at least larger than the radius of curvature of a hypothetical circular track member around the force and aft wheels (18, 22), and
   inner checking formations (102) arranged to abut corresponding inner checking (102) formations of adjacent track elements to limit the radius of curvature a portion of the track member can assume without deformation to a predetermined minimum value corresponding to the radius of curvature of a portion of the track member when supported on one of said wheels (18, 22);
   each track element (32, 232) comprising a seat (40, 240) for the or each core element (100, 300) at a predetermined position at a level corresponding substantially to the said predetermined positions of the lateral pivot axes.

2. An endless track member as claimed in Claim 1 characterized in that the or all core elements (100, 300) have a predetermined (combined) resilience and in which the or all core elements are supported on said seats (40, 240) such as to allow relative sliding of the or all core elements over the respective seats such that, in use under the weight of the track laying vehicle, the or all core elements can be stretched to allow the track member (12) to flatten along a portion of its length, which portion is at least shorter than the longitudinal spacing of the wheel axes (18, 22).

3. An endless track member as claimed in Claim 1 characterized in that said maximum radius of curvature is between three and four times the radius of curvature of said hypothetical circular track member extending around the fore and aft wheels (18, 22).

4. An endless track member as claimed in Claim 1 characterized in that each of a major portion of the track elements (32) comprises at least one abutting member (76, 276),
   which is located on the track element with at least slight freedom of motion in pivoting about an axis at right angles to an operative surface of the tread (64, 264) of the track element,

which has a dimension in the longitudinal direction of the track member corresponding to the dimension of the track element in said direction, and

which has opposed sides (78) providing the abutting formations.

5. An endless track member as claimed in Claim 4 characterized in that the or each abutting member (76, 276) of at least one track element (32, 232) is irrotationally located on said track element in a predetermined orientation relative to an axis at right angles to an operative surface of the tread (64, 264) of said track element, such as to cause those abutting members (76, 276) of the other track elements (32, 232) located with said at least slight freedom of motion in pivoting, to align themselves generally in accordance with said predetermined orientation.

6. An endless track member as claimed in Claim 1 characterized in that each track element (32, 232) has a tread support plate (62, 262) supporting the tread (64, 264) of the track element, the tread support plates being of steel and having opposed sides (106) which are laterally orientated and which provide said outer checking formations.

7. An endless track member as claimed in Claim 6 characterized in that each track element is of open construction having a base (34, 234), the tread support plate (62, 262) being spatially mounted on the base via spacers (70, 270).

8. An endless track member as claimed in Claim 1 characterized in that said fore and aft wheels (18, 20), are each in the form of a composite or double wheel having a circumferential groove, in which each of at least some of the track elements has, fast therewith, intermediate lateral extremities thereof, a locating member (42, 242) arranged to extend in a direction generally oppositely to and at right angles to an operative surface of the tread (64, 264) of the track element, each locating member (42) having laterally outwardly facing sides (46, 246) of size and shape predetermined to be complemental to the grooves of the wheels, each locating member having longitudinally outwardly facing surfaces (102) of complemental size and shape to provide the inner checking formations.

9. An endless track member as claimed in Claim 8 characterized in that each locating member (42, 242), when viewed laterally in profile, tapers to a minimum dimension at a free end thereof to provide complementally taper surfaces (102) of the inner checking formations, which taper surfaces, in use while being supported on a wheel, will extend radially (102.1).

10. An endless track member as claimed in Claim 1, characterized in that each track element (32, 232) includes at a first side, a protrusion (82) and, at a second side, a complemental socket (86) aligned with the protrusion (82) of an adjacent track element, the protrusions and sockets being arranged and being of appropriate shape to allow partial penetration and withdrawal through small distances of the protrusions into and from their respective sockets in the form of pivotal rolling in use substantially without rubbing as pivoting takes place during bending and unbending of the track member as it runs in use over the force and aft wheels (18, 22), the protrusions and sockets being adapted to align the track elements with one another.

FIG 1

FIG 2

FIG 3

FIG 4

**European Patent**

**Office**

# EUROPEAN SEARCH REPORT

Application Number

EP 91 30 7726

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A- 973 690 (KEGRESSE) <br> * whole document * | 1,10 | B 62 D 55/253 |
| A | | 2 | |
| | --- | | |
| X | US-A-2 063 762 (SCHULTZ) <br> * whole document * | 1,6,7, 10 | |
| | --- | | |
| A | EP-A-0 223 867 (BARNARD) <br> * whole document * | 1,8,9 | |
| | --- | | |
| A | EP-A-0 251 255 (BARNARD) <br> * whole document * | 1,8,9 | |
| | --- | | |
| A | US-A-3 345 113 (SIBER) <br> * column 4, lines 37-44; column 5, lines 1-44; figures 2,6 * | 1 | |
| | --- | | |
| A | EP-A-0 341 083 (NATIONAL RESEARCH COUNCIL OF CANADA) <br> * column 4, lines 41-55; figure 6 * | 1 | |
| | ----- | | **TECHNICAL FIELDS SEARCHED (Int. Cl.5)** <br><br> B 62 D |

The present search report has been drawn up for all claims

| Place of search | Date of completion of the search | Examiner |
|---|---|---|
| BERLIN | 28-11-1991 | KRIEGER P O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P0401)